# EUROPEAN PATENT APPLICATION

(11) **EP 4 560 894 A1**
(43) Date of publication of application: **28.05.2025**
(21) Application number: 23211365.4
(22) Date of filing: 22.11.2023
(51) Int. Cl.: H02K 7/00, H02K 11/042, H02K 19/38, H01F 38/18

(54) **AN ELECTRICALLY EXCITED ROTOR FOR AN ELECTRIC MOTOR**

(71) Applicant: Polestar Performance AB, 405 31 Gothenburg (SE)
(72) Inventor: HOHLFÄLT, Peter, 475 37 Bohus-Björkö (SE)
(74) Representative: Zacco Sweden AB

(57) **Abstract**

The present disclosure relates to an electrically excited rotor (200) for an electric motor comprising an annular rotor core (201) comprising a circumferentially distributed winding (202), a hollow rotor shaft (10) accommodated by said annular rotor core (201), the rotor shaft (10) extending axially along a centre axis (c1). Further, the rotor (200) comprises a transformer device (20), an end-busbar (11) arranged to transmit said DC power to an end portion (12) of said winding (202). The end portion (12) of said winding is positioned at an interior (10a) of said hollow rotor shaft (10) wherein the end-busbar (11) contacts said end portion (12) at said interior (10a) of said hollow rotor shaft (10).

## Description

### TECHNICAL FIELD

The present disclosure relates to an electrically excited rotor for an electric motor and a method for manufacturing an electrically excited rotor.

### BACKGROUND

In an electric vehicle, the rotor and stator are vital components of the electric motor that drives the vehicle's wheels. The rotor is the rotating part of the motor, typically made of a series of electromagnets, which are energized by electrical current. As the rotor spins, it generates a magnetic field that interacts with the stator. The stator is the stationary part of the motor, typically consisting of a windings wound around a core. The rotor and stator work together to convert electrical energy stored in the EV's battery into mechanical energy to drive the vehicle, making them critical components of the EV powertrain.

Permanent magnets used in rotors are not considered environmentally friendly for several reasons. First, the production of permanent magnets involves mining and refining of rare earth elements, which can cause environmental degradation and pollution. Also, permanent magnets can pose challenges in recycling and disposal, as they contain hazardous materials that can potentially harm the environment if not handled properly. Therefore, while permanent magnets have many technological benefits, their production and use can have negative environmental implications that need to be carefully managed.

Based on the above, electrically excited rotors using windings around the rotor core are considered to be more environmental friendly compared to permanent magnet rotors.

However, electrically excited rotors of the present art fail to provide an efficient configuration of the connection between the rotor winding and the busbar that is arranged to provide DC power to the rotor winding.

For example, the configurations of the connection between the rotor winding and the busbar the present art either too complex and/or fail to be secure enough.

Hence, there is room in the present art to provide an electrically excited rotor in which the configuration of the connection between the rotor winding and the busbar is more efficient.

Specifically, such a connection should be convenient to establish and/or secure once established.

### SUMMARY

It is therefore an object of the present disclosure to alleviate at least some of the mentioned drawbacks to provide an electrically excited rotor and a method for manufacturing such. The present disclosure is at least partly based on the insight that a rotor winding contacting a busbar within an interior of the rotor shaft will provide a more efficient connection between the winding and the busbar.

The present disclosure relates to an electrically excited rotor (hereinafter referred to as "the rotor") for an electric motor comprising an annular rotor core comprising a circumferentially distributed winding. Further, the rotor comprises a hollow rotor shaft (hereinafter referred to as the "rotor shaft") accommodated by said annular rotor core, the rotor shaft extending axially along a centre axis. Further, the rotor comprises a transformer device configured to receive alternating current (AC) power from a power source, rectify said AC power to direct current (DC) power. Further, the rotor comprises an end-busbar arranged to transmit said DC power to an end portion of said winding. Further, the end portion of said winding is positioned at an interior of said shaft and the end-busbar contacts said end portion at said interior of said shaft (i.e. within said shaft).

Advantageously, as the connection between the end-busbar and the end portion is within the rotor shaft, the connection will be more efficient in several ways. Firstly, it will provide a more compact arrangement as the connection is within the shaft rather than outside of the shaft. Further, it will provide a more secure arrangement compared to prior solutions as there is less risk of the connection being disconnected due to its proximity to the axis of rotation. Additionally, it will provide a more secure arrangement as the connection will be shielded by the shaft.

The end portion of the rotor may extend through an insertion hole of said rotor shaft. Accordingly, the rotor shaft may comprise an opening (insertion hole) which is arranged to receive the end portion allowing the end portion to reach the interior of the shaft therethrough.

An advantage of this is that it provides a convenient structure for inserting the winding into the rotor shaft.

The end-busbar and said end portion may be in contact with each other at a contact portion of said rotor shaft, the contact portion being electrically insulated.

Accordingly, as a part of the rotor shaft interior is electrically insulated the end-busbar and end portion can abut towards the rotor shaft interior. Hence, enabling the rotor shaft interior to be used as means for tighetning the end-busbar and end portion against each other.

In some aspects, the end-busbar may contact said end portion by a tensioning connection.

An advantage of this is that a tensioning connection provide enhanced structural stability and load distribution while allowing for adjustability.

In some aspects, the end-busbar and said end portion of said winding, when in said tensioning connection, overlap, preferably, the end-busbar and said end portion of said winding extend essentially parallel to said centre axis. In other words, the end portion and the end-busbar may form an overlap configuration relative eachother. Thereby, they may contact/be tensioned towards each other lengthwise. However, the end-busbar and said end portion of said winding may be in contact by another type of connection, not being a tensioning connection.

Further, the transformer device comprises a rectifier board arranged to rectify said AC power to DC power, wherein the end-busbar protrudes from said rectifier board allowing the end-busbar to obtain rectifier DC power from the rectifier board and supply said rectified DC power to said end portion of said winding. Thereby, powering the winding.

The rectifier board may be circumferentially enclosed by a socket, wherein the end-busbar extends to an outer side of said socket, wherein at least a part of said outer side of said socket/abuts/contacts or is adjacent to an (electrically insulated) inner surface of said rotor shaft to provide a tensioning connection between the end-busbar and said end portion of said winding. In other words, the end-busbar and said end portion to press against each other. Accordingly, the end-busbar and said end portion of said winding are positioned between the inner surface of the rotor shaft and said outer side of said socket.

The socket may be inserted in the shaft by press-fit.

An advantage of this is that the end-busbar and the end portion contact each other in a reliable manner. The socket may be formed as a hollow cylinder or any other suitable form, preferably, the socket. The socket may be formed in a flexible dielectric material.

The transformer device may further comprise a transmitting arrangement and a receiving arrangement, the receiving arrangement being configured to contactless receive AC power from said transmitting arrangement and transmit, by an intermediate busbar, said AC power to said rectifier board. The receiving arrangement may be attached to the rotor shaft and the transmitting may be attached to a fixed surface external of the rotor shaft such as a rotor frame or electric motor frame.

The receiving arrangement may be mounted in said socket. Accordingly, the socket may be a pre-assembled unit which is conveniently inserted into the rotor shaft.

At least one of the rotor shaft and said socket may comprise guiding means for enabling the end-busbar to contact said end portion of the winding. Accordingly, there may be a guiding means in the form of visual signs or in the form of a channel/rail/protrusion (forming a key slot) or any other type of guiding means that enables the socket to be inserted into the shaft in a manner that enables the end-busbar and end portion of the winding to contact each other once the socket is inserted.

Advantageously, this allows for a rapid contact between the winding and the end-busbar as they are in contact simply by insertion of the socket into the shaft. Thereby not being in need of any supplementary tools or means for attachment of the winding and the end-busbar.

The present disclosure further relates to an electric motor comprising the electrically excited rotor according to any aspect herein. The electric rotor comprising a stator that accommodates the rotor. The stator may be any suitable type of conventional stator that is adapted to interact with the magnetic field provided by the rotor and thereby cause the rotor to rotate.

Accordingly, the present disclosure further relates to an electric vehicle comprising the electric motor according to any aspect herein.

Moreover, the present disclosure relates to a method for manufacturing/assembling an electrically excited rotor according to any aspect herein, the method comprising the steps of:
- providing said rotor core, said transformer device and said end-busbar;
- inserting said end portion of said winding into an interior of said rotor shaft;
- inserting said end-busbar in said rotor shaft to contact said end portion of said winding.

In some aspects of the method, prior to inserting said end busbar in said rotor shaft, the method comprises:
- providing a rectifier board arranged to rectify said AC power to DC power, wherein the end-busbar protrudes from said rectifier board so to be able to supply DC power to the winding;
- placing said rectifier board in a socket circumferentially enclosing said rectifier board, wherein the end-busbar protrudes out from said socket when said rectifier board is inserted therein;
- installing said socket to said rotor shaft interior to allow the end-busbar to contact said end portion of said winding when installed.

Preferably, the socket is press-fit inserted into said rotor shaft.

The method provides a convenient and rapid way of manufacturing the rotor.

### BRIEF DESCRIPTION OF THE DRAWINGS

These and other features and advantages of the present disclosure will now be further clarified and described in more detail, with reference to the appended drawings;
- Figure 1: illustrates schematically a side view of an electrically excited rotor in accordance with some aspects of the present disclosure, in Figure 1 the rotor core is not illustrated;
- Figure 2: illustrates an objective exploded view of an electrically excited rotor and a socket in accordance with some aspects of the present disclosure;
- Figure 3: illustrates a method for manufacturing an electrically excited rotor in accordance with some aspects of the present disclosure;
- Figure 4: illustrates, in the form of a graphical flowchart, insertion of a socket into a rotor shaft in accordance with some aspects of the present disclosure; and
- Figure 5: illustrates schematically a side view of a vehicle in accordance with some aspects of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

The term "hollow rotor shaft" may refer to that the rotor shaft comprises a void/space at the interior of the rotor shaft. The rotor shaft may at one end be connected to an output shaft of an EV.

The expression "end-busbar contacts said end portion at said interior of said shaft" may refer to that the end-busbar contacts said end portion at the internal void/space within the rotor shaft, as well as any potential cavity (such as the insertion hole) that may extend through the body/structure of the shaft. Hence, they may contact each other at both a primary void and secondary cavities that traverse the shaft's structure. Hence, the expression may be interchanged with "end-busbar contacts said end portion at said interior space defined within said hollow rotor shaft and/or within the structure/an insertion hole of said hollow rotor shaft".

The term "interior" may be interchanged with "interior space defined within the hollow rotor shaft".

The term "busbar" may refer to an electrical conductor typically made of copper or aluminium used to distribute electric power. The term busbar as used herein may refer to a flat rigid conductor.

The term "rotor" herein may refer to an electrically excited rotor. An electrically excited rotor being a rotor that is magnetized by an external electrical source. Preferably, DC power received from a rectifier board.

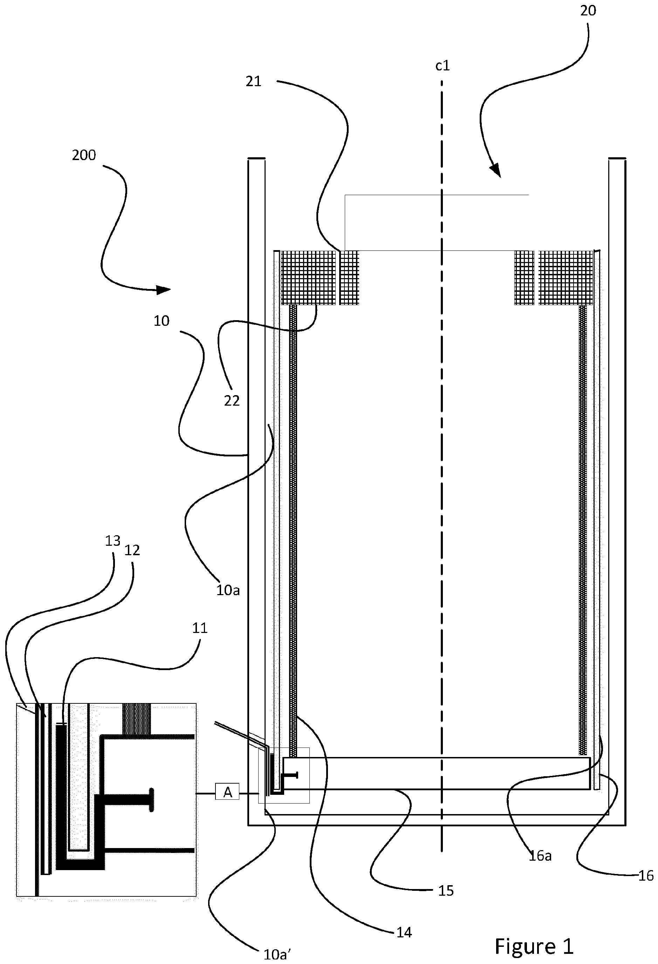

Figure 1 illustrates a side cross-sectional view of a part of an electrically excited rotor 200 for an electric motor in which the rotor core and windings are omitted. The electrically excited rotor 200 of Figure 1 comprises a hollow rotor shaft 10 extending axially along a centre axis c1. Further, the rotor 200 comprises a transformer device 20 configured to receive AC power from a power source and rectify said AC power to DC power. Further, the transformer device 20 comprises an end-busbar 11 arranged to transmit said DC power to an end portion 12 of said winding. Thereby, enabling the winding to simulate a permanent magnetic field. As illustrated in the enlarged section A of Figure 1 the end portion 12 of said winding is positioned at an interior 10a of said shaft 10, wherein the end-busbar 11 contacts said end portion 12 at said interior of said shaft 10 so that an electric connection is established between the transformer device 20 and the winding.

The transformer device 20 as illustrated in Figure 1 may comprise several components. Figure 1 illustrates that the transformer device 20 comprises a transmitting arrangement/static part 21 and a receiving arrangement/rotary part 22. The static part 21 may be attached to a frame of the rotor 200 and the rotary part 22 may be attached to said rotor shaft 10 such that the rotary part 22 rotates relative the static part 21 when the rotor 200 rotates. Accordingly, the static part 21 may receive AC power from a battery pack of an electric vehicle and inductively/contactless transmit the AC power to the rotary part 22. Further, the rotary part 22 may be connected to a rectifier board 15 which is arranged to rectify the AC power to DC power. Accordingly, the end-busbar (which is preferably a pair of end busbars, each connected to a respective terminal of said rectifier board, i.e. a negative and a positive terminal thereof) 11 may be connected between the rectifier board 15 and the end portion 12 of the winding of the rotor.

Accordingly, the rectifier board 15 may receive the AC power from said rotary part/receiving arrangement 21 by means of a pair of intermediate busbars 14 connected between the rotary part 21 and the rectifier board 15.

The transmitting arrangement 21 and the receiving arrangement 22 of the transformer device 20 may be arranged so that the AC power is transferred radially. Accordingly, one of the transmitting arrangement 21 and the receiving arrangement 22 may circumferentially enclose the other. The transmitting arrangement 21 and receiving arrangement 22 may each comprise a core formed by e.g. a ferrite material, the core being wound with a coil.

Preferably, the transmitting arrangement 21 and the receiving arrangement 22 are arranged in a radial configuration as shown in Figure 1 at one base portion of the shaft 10, wherein the rectifier board 15 is arranged at another opposite base portion of the shaft 10.

The rectifier board 15 may comprise switching and control components which vary in accordance with the requirements of the rectifier board 15. The switching and control components may comprise rectifier bridges, diodes, transistors, thyristors, gate drivers, control circuits (e.g. micro controllers), voltage regulators, sensor devices and any other suitable components for enabling the rectifier board to convert AC power to DC power. Further, the switching and control components may comprise protection components such as fuses and circuit breakers. In some aspects herein, the term "switching and control components" may be interchanged with electrical components.

Figure 1 further illustrates in the enlarged view A, that the end portion 12 extends through an insertion hole 13 in said rotor shaft 10. The insertion hole 13 may be provided to extend through any wall/structure of the shaft such as a circumferential wall thereof. The term "end portion" may refer to an end of the winding. Accordingly, the end portion may be inserted into the insertion hole 13.

The portion of the rotor shaft 10 in which each end-busbar 11 and a corresponding end portion 12 are in contact may be referred to as a contact portion. Accordingly, such a contact portion may be electrically insulated.

Further, in some aspects, such as the one illustrated in Figure 1, the end-busbar 11 contacts said end portion 12 by a tensioning connection. The tensioning connection may refer to that the end-busbar 11 and end portion 12 of the rotor are pressed against each other by a defined force. Accordingly, they may press against each other in a manner that enables them to be electrically connected without the use of any fastening means. In some aspects, a fastening means such as adhesive may accompany the connection therebetween to provide additional fastening.

The end-busbar 11 and said end portion 12 of said winding may as illustrated in the enlarged section A, overlap eachother, preferably, the end-busbar 11 and said end portion 12 of said winding extend essentially parallel to said centre axis c1. Accordingly, the end portion 12 may lengthwise overlap the end-busbar 11. Enabling a great contact area between the end-busbar 11 and the end portion 12.

In some aspects, as illustrated in Figure 1, the tensioning connection between the end busbar 11 and the end portion 12 may be provided by use of a socket 16. However, it should be noted that other alternative ways may also be provided.

Accordingly, as illustrated in Figure 1, the end-busbar 11 may extend to an outer side 16a of said socket 16 associated with an outer circumference of the socket, wherein at least a part of said outer side 16a of said socket 16 contacts or is adjacent to an inner surface 10a' at an interior 10a of said rotor shaft 10 to provide a tensioning connection between the end-busbar 11 and said end portion 12 of said winding. The socket 16 may be dimensioned to, when inserted into the shaft 10 enable the end-busbar 11 to press against the end portion 12 of the winding. The socket 16 may as illustrated in Figure 1 enclose the rectifier board 15. Accordingly, the socket 16 may comprise a receiving cavity which is arranged to accommodate the rectifier board 15 to allow the rectifier board 15 to be inserted therein. Moreover, as illustrated in Figure 1, the receiving arrangement 21 may also be inserted in the socket 16. Hence, the socket 16 may comprise a first and a second receiving portion for accommodating the rectifier board 15 and the receiving arrangement 21. The receiving arrangement 21 may comprise a pair of contacting holes that are dimensioned to, by press-fit, receive the intermediate busbars 14. Hence, facilitating a convenient connection between the rectifier board 15 and the receiving arrangement 21.

The socket may be formed by a flexible dielectric material such as polyethylene terephthalate (PET), polyurethane (PU), polyamide (PI), polyethylene naphthalate (PEN) or any other suitable material.

In order to enable an installation of the socket 16 into the shaft 10 which achieves a contact between the at least one end-busbar 11 and the end portion 12 of the winding; the socket 16 and/or the shaft 10 comprises guiding means for enabling the end-busbar 11 to contact said end portion 12 of the winding once the socket 16 is fully inserted into the shaft 10. The socket 16 may be arranged to relative the shaft 10 to enable the end-busbar 11 to contact said end portion 12 by a tensioning connection provided by the shaft 10 and the socket 16 pressing the end portion 12 and the end-busbar 11 against each other.

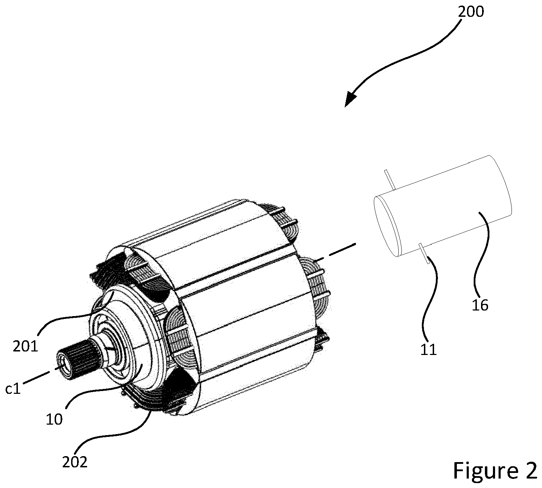

Figure 2 illustrates an objective view of the rotor 200 according to any aspect herein. As illustrated in Figure 2. Figure 2 illustrates that the rotor 200 comprises a rotor core 201 and a rotor winding 202 circumferentially distributed about the rotor core 201. Further, Figure 2 illustrates that the rotor 200 comprises a rotor shaft 10 in accordance with any aspect herein. Moreover, Figure 2 illustrates the socket 16 as disclosed herein. The socket 16 may comprise a at least part of the transformer arrangement 20 enclosed therein (i.e. at least the rectifier board and the receiving arrangement). Moreover, Figure 2 illustrates that the end-busbar 11 protrudes out from the socket 16. Hence, socket 16 and the shaft 10 are dimensioned relative each other to enable the end-busbar 11 to contact an end portion 12 of the winding 202 when said socket 16 is inserted in the interior 10a of the shaft 10. The rotor of Figure 2 comprises six poles but the rotor 200 may comprise any suitable number of poles such as four poles. Also the rotor 200 may comprise a single winding 202 wound around all poles or a plurality of windings. The rotor 200 may further comprises an output shaft and an end plates (not shown) that encloses the winding overhang at both bases of the rotor 200.

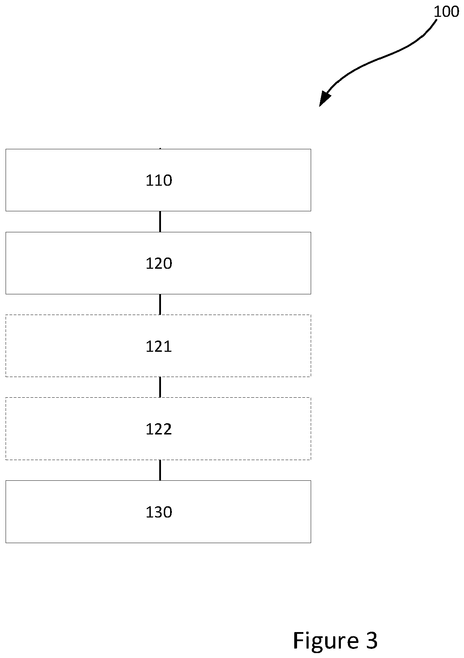

Figure 3 illustrates a method 100 for manufacturing/assembling the electrically excited rotor in the form of a schematic flowchart according to any aspect herein. The method 100 comprising the steps of providing 110 said rotor core, said transformer device and said end-busbar. Further, the method 100 comprises the steps of inserting 120 said end portion of said winding into an interior of said rotor shaft and inserting 130 said end-busbar in said rotor shaft to contact said end portion of said winding. Figure 3 further illustrates that the method 100 may comprise the steps of placing 121 said rectifier board in a socket circumferentially enclosing said rectifier board, wherein the end-busbar protrudes out from said socket (i.e. protrudes out from the socket away from the rectifier board) when said rectifier board is inserted therein. Further, the method 100 may comprise installing/mounting 122 said socket to said rotor shaft interior to allow the end-busbar to contact said end portion of said winding when installed. The socket may be installed by press-fit and/or by a fastening means such as adhesive, screws, bolts, nuts or any other suitable fastening means.

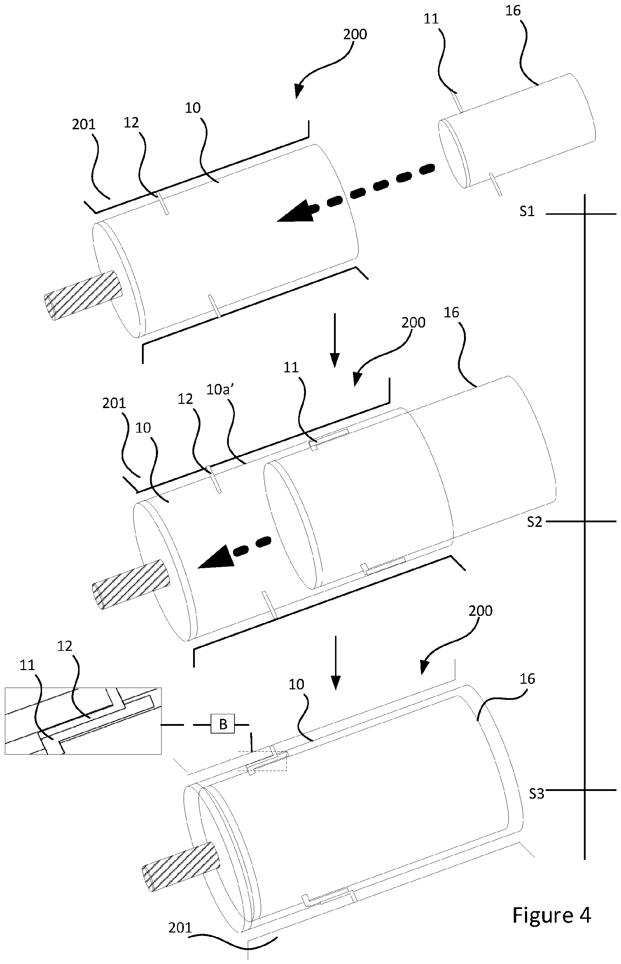

Figure 4 illustrates, a graphical flow chart depicting a socket/enclosure 16 being inserted within the rotor shaft 10 according to any aspect herein. The graphical flow chart is depicted in three steps S1-S3. In S1, the end-busbar which is arranged to transfer DC power to the rotor winding protrudes out from the socket 16. Also, S1 illustrates that the end portion 12 of the winding is inserted into the shaft 10.

Step S2 in Figure 4 illustrates that the socket 16 is inserted in the shaft 10 such that the end-busbar 11 is bent/deformed. Hence, the end-busbar may be arranged to, during insertion of the socket/rectifier board into the shaft 10 be guided by the inner surface 10a' if the shafts 10 interior 10a. Further, S3 in Figure 4 illustrates that once the socket is within the shaft 10 at a defined position, the end-busbar 11 and the end portion 12 of the winding are in physical contact. Thereby, allowing DC power to be transferred from the end-busbar 12 to the winding of the rotor 200. The shaft and/or socket may comprise a guiding means such that the end-busbar 11 contacts the end portion 12 once installed. The guiding means may be a key slot. I.e. the shaft may comprise a protrusion which is arranged to mate with a slot in the socket 16 or the rectifier board thereby enabling the socket/rectifier board to be inserted in the shaft 10 in a desired position to enable the winding to contact the end-busbar 11. The guiding means may further comprise further elements (such as a protrusion/slot/cavity) in the rotor shaft inner surface 10a' which is arranged to facilitate the winding end portion 12 and the end-busbar 11 to contact each other.

Enlarged section B in step S3 illustrates how the winding end portion 12 and the end-busbar contact each other. It should be noted that the rotor core 201 is schematically and only partially illustrated in Figure 4.

It should be noted that the end-busbar 11 and the end portion 12 may be contacted, e.g. by a tensioning mechanism/tensioning connection in alternative manners which excludes the socket 16. In some aspects, the tensioning connection is provided in the wall of the shaft 10. In other aspects, the rotor shaft interior 10a may comprise at least one electric contacting element/power outlet/plug point which is arranged to receive the end portion 12 and the end-busbar 11 therein. Thereby, providing a connection that enables DC power to be transferred to the winding. The plug point may receive the end portion 12 and the end-busbar 11 by press-fit. The electric contacting element may be pre-mounted within the shaft. The electric contacting element may function with or without a socket according to any aspect herein.

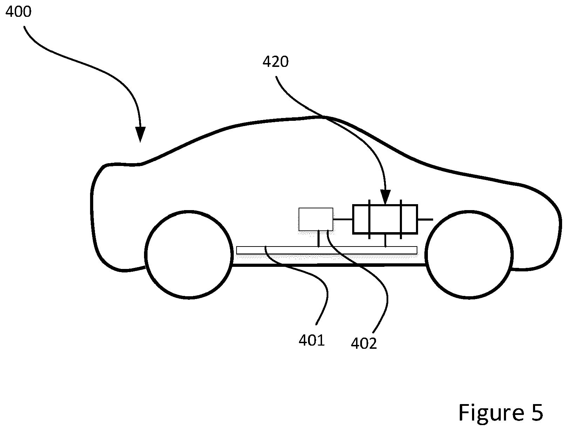

Figure 5 illustrates schematically a side view of a vehicle 400 comprising an electric motor 420. The electric motor 420 may comprise the rotor 200 according to any aspect herein accommodated by a stator so to form an electric motor 420. The stator may comprise a stator winding arranged to receive AC power. Further, the electric vehicle 400 comprises a battery pack 401 a number of other electrical components, including an electrical current transmission system, safety system, battery management system, current management system, inverter(s) and a battery busbar interconnecting the various components. The battery pack 401 may comprise battery modules, each module comprising battery cells. The battery pack may be arranged to provide AC power to the transformer device according to any aspect herein. Further, the electric vehicle 400 may comprise an electronic control unit (ECU) 402 in order to control the electric motor 420. The ECU 402 or components thereof can comprise or include various modules, each of which is constructed, programmed, configured, or otherwise adapted to autonomously carry out a function or set of functions.

## Claims

1. An electrically excited rotor (200) for an electric motor comprising:
- an annular rotor core (201) comprising a circumferentially distributed winding (202);
- a hollow rotor shaft (10) accommodated by said annular rotor core (201), the rotor shaft (10) extending axially along a centre axis (c1);
- a transformer device (20) configured to:
∘ receive AC power from a power source;
∘ rectify said AC power to DC power;
- an end-busbar (11) arranged to transmit said DC power to an end portion (12) of said winding (202);
wherein the end portion (12) of said winding is positioned at an interior (10a) of said hollow rotor shaft (10),
wherein the end-busbar (11) contacts said end portion (12) at said interior (10a) of said hollow rotor shaft (10).

2. The electrically excited rotor (200) according to claim 1, wherein the end portion (12) extends through an insertion hole (13) in said rotor shaft (10).

3. The electrically excited rotor according to claim 2, wherein said end-busbar (11) and said end portion (12) are in contact at a contact portion of said rotor shaft (10), the contact portion being electrically insulated.

4. The electrically excited rotor according to any one of the preceding claims, wherein said end-busbar (11) contacts said end portion (12) by a tensioning connection.

5. The electrically excited rotor according to any one of the preceding claims, wherein said end-busbar (11) and said end portion (12) of said winding overlap, preferably, the end-busbar and said end portion of said winding extend essentially parallel to said centre axis (c1).

6. The electrically excited rotor according to any one of the preceding claims, wherein said transformer device comprises a rectifier board (15) arranged to rectify said AC power to DC power, wherein the end-busbar (11) protrudes from said rectifier board.

7. The electrically excited rotor according to claim 6, wherein the rectifier board is circumferentially enclosed by a socket (16), wherein the end-busbar (11) extends to an outer side (16a) of said socket (16), wherein at least a part of said outer side (16a) of said socket (16) contacts or is adjacent to an inner surface (10a') at an interior (10a) of said rotor shaft (10) to provide a tensioning connection between the end-busbar (11) and said end portion (12) of said winding.

8. The electrically excited rotor according to any one of the claims 6 or 7, wherein said transformer device further comprises a transmitting arrangement and a receiving arrangement, the receiving arrangement being configured to:
- contactless receive AC power from said transmitting arrangement;
- transmit, by an intermediate busbar, said AC power to said rectifier board.

9. The electrically excited rotor according to any one of the claims 6-8, wherein said receiving arrangement is mounted in said socket (16), wherein the transmitting arrangement is mounted external of the rotor shaft (10), thereby being stationary relative the rotor shaft (10).

10. The electrically excited rotor according to any one of the claims 6-9, wherein said socket (16) is formed by a flexible dielectric material.

11. The electrically excited rotor according to any one of the claims 6-10, wherein at least one of said rotor shaft (10) and said socket (16) comprises guiding means for enabling the end-busbar to contact said end portion of the winding.

12. An electric motor comprising the electrically excited rotor according to any one of the claims 1-11.

13. An electric vehicle comprising the electric motor according to claim 12.

14. A method (100) for manufacturing the electrically excited rotor according to any one of the claims 1-11, the method comprising the steps:
- providing (110) said rotor core, said transformer device and said end-busbar;
- inserting (120) said end portion of said winding into an interior of said rotor shaft
- inserting (130) said end-busbar in said rotor shaft to contact said end portion of said winding.

15. The method (100) according to claim 14, wherein the transformer device comprises a rectifier board, wherein the end-busbar protrudes from said rectifier board, wherein prior to inserting (130) said end busbar in said rotor shaft, the method comprises:
- placing (121) said rectifier board in a socket circumferentially enclosing said rectifier board, wherein the end-busbar protrudes out from said socket when said rectifier board is inserted therein;
- installing (122) said socket to said rotor shaft interior to allow the end-busbar to contact said end portion of said winding when installed.
